Europäisches Patentamt

European Patent Office

Office européen des brevets

(19)

(11) **EP 0 626 279 B1**

(12) **FASCICULE DE BREVET EUROPEEN**

(45) Date de publication et mention
de la délivrance du brevet:
**27.12.1996 Bulletin 1996/52**

(51) Int. Cl.6: **B60C 5/16**, B60C 15/028

(21) Numéro de dépôt: **94107292.8**

(22) Date de dépôt: **10.05.1994**

(54) **Anneau d'étanchéité entre les bourrelets d'un pneumatique**

Dichtungsstreifen zwischen Reifenwülste

Sealing ring between tire beads

(84) Etats contractants désignés:
**BE DE FR GB IT SE**

(30) Priorité: **26.05.1993 FR 9306608**

(43) Date de publication de la demande:
**30.11.1994 Bulletin 1994/48**

(73) Titulaire: **COMPAGNIE GENERALE DES
ETABLISSEMENTS MICHELIN-MICHELIN & CIE
F-63040 Clermont-Ferrand Cédex 01 (FR)**

(72) Inventeur: **Girard, Dominique
F-63119 Chateaugay (FR)**

(74) Mandataire: **Devaux, Edmond-Yves
Michelin & Cie
Service SRK. Brevets
23, Place des Carmes
63040 Clermont-Ferrand Cédex (FR)**

(56) Documents cités:
**EP-A- 0 084 490          FR-A- 2 158 268
GB-A-   221 330          US-A- 2 339 542
US-A- 2 731 063          US-A- 4 063 584**

Printed by Rank Xerox (UK) Business Services
2.13.10/3.4

## Description

La présente invention concerne un élément annulaire destiné à être placé entre les deux bourrelets d'un pneumatique sans chambre à air, monté sur une jante à base plate et dont l'un des rebords est amovible ; ledit pneumatique étant particulièrement destiné à équiper les engins de manutention. Elle concerne aussi l'ensemble formé de l'anneau, du pneumatique et de la jante.

Les pneumatiques usuels pour engins de manutention, comme dans pratiquement tous les cas où les pneumatiques sont montés sur des jantes plates, sont des pneumatiques vulcanisés à l'aide de membranes de vulcanisation, dites à "nids d'abeilles" et telles que décrites par exemple dans le brevet US 3 970 416, et utilisés avec une chambre à air et un élément de protection de faible épaisseur et placé entre ladite chambre et le fond de jante. Cet élément annulaire possède le plus souvent des extrémités axiales ou lèvres de forme appropriée afin de ne pas blesser la chambre à air de gonflage.

Les pneumatiques pour engins de manutention présentent dans la majorité des cas un rapport de forme intérieure H/S au plus égal à 0,8 et souvent voisin de 0,5, H étant la hauteur de la cavité intérieure du pneumatique mesurée entre le fond de jante et le point de la paroi intérieure de la cavité le plus éloigné de l'axe de rotation du pneumatique et S étant la largeur axiale maximale de la cavité intérieure. Il s'ensuit que de nombreuses avaries apparaissent sur les chambres à air nécessaires au roulage de tels pneumatiques, en particulier des usures rapides des chambres.

Par ailleurs, les pneumatiques étudiés se montent généralement sur des jantes plates formées de trois éléments qui sont le fond de jante solidaire d'un premier rebord de jante, l'anneau de verrouillage, et le deuxième rebord de jante. Lorsque la jante est prévue pour une utilisation du pneumatique sans chambre, il est possible de monter un tel pneumatique sur une telle jante, un joint d'étanchéité étant en effet généralement prévu entre le talon du pneumatique et la jante du côté du rebord de jante amovible. Néanmoins le fait que les caractéristiques dimensionnelles des jantes sont assorties de tolérances assez larges, que ces jantes sont souvent déformées et malpropres, que les difficultés pour placer et maintenir un joint d'étanchéité en position correcte sont nombreuses, ne permet pas d'obtenir une étanchéité correcte lors du montage d'un pneumatique sans chambre sur une jante plate ou une jante du même genre à trois éléments.

Un anneau d'étanchéité ayant les caractéristiques du préambule de la revendication 1 est décrit dans le document US-A- 2 731 063.

Afin d'obtenir l'étanchéité d'un pneumatique sans chambre à air monté sur une jante du genre décrit, l'invention utilise pour le montage dudit pneumatique sur ladite jante un anneau d'étanchéité placé sur le fond de jante compris entre les deux bourrelets du pneumatique. Cet anneau est caractérisé en ce que sa section méridienne, à l'état libre, est délimitée par une génératrice radialement intérieure de rayon égal au rayon de la portion de jante sur laquelle elle sera posée et de largeur axiale comprise entre 0,8 et 1 fois la distance axiale séparant les extrémités axialement intérieures des pointes de bourrelets, par une génératrice radialement extérieure de rayon supérieur au rayon de la génératrice intérieure d'une quantité $h_c$ comprise entre 0,05 $R_J$ et 0,40 $R_J$, $R_J$ étant le rayon au siège de la roue, et par deux côtés latéraux de profiles identiques tel que le serrage transversal de l'anneau sur les parois intérieures des bourrelets, négatif ou nul au niveau de la génératrice intérieure, soit successivement, faiblement croissant sur une distance radiale $h_1$ au moins égale à 0,05 $R_J$, puis fortement croissant sur une distance radiale $h_2$ au plus égale à 0,4 $R_J$ pour devenir au plus constant sur la distance radiale $h_3$ au moins égale à 0,02 $R_J$, et qui, additionnée aux hauteurs $h_1$ et $h_2$, représente la hauteur $h_B$ des côtés latéraux de l'anneau, la différence $h_B - h_C$ au plus égale à 0,05 $R_J$.

Il faut entendre par serrage transversal de l'anneau d'étanchéité sur les parois axialement intérieures des bourrelets, sur une génératrice de rayon donné par rapport à l'axe de rotation, la différence, au niveau de cette génératrice, entre la largeur axiale de l'anneau non monté et la distance axiale séparant les deux bourrelets du pneumatique monté sur sa jante de service et gonflé à sa pression nominale. Si on appelle s le serrage transversal, $L_A$ la largeur axiale de l'anneau et $L_B$ la distance axiale entre les bourrelets, $s = L_A - L_B$.

Il faut entendre par faible croissance du serrage sur la distance $h_1$ une croissance uniforme, continue et sensiblement linéaire jusqu'à obtenir, au niveau de la génératrice située à la distance radiale $h_1$ du fond de jante, un maximum de serrage positif et de préférence au plus égal à 0,3 $L_A$.

Une forte croissance du serrage sur la distance $h_2$ non nulle est une croissance uniforme, continue et sensiblement linéaire jusqu'à obtenir au niveau de la génératrice distante radialement du fond de jante de la distance $h_1 + h_2$ un maximum de serrage positif, linéaire et de préférence au moins égal à 0,15 $L_A$.

Une forte croissance sur la distance non nulle est une croissance infinie jusqu'à une valeur de serrage au moins égale à 0,15 $L_A$.

Par serrage au plus constant, il faut entendre un serrage constant ou un serrage décroissant, avec la distance radiale mesurée par rapport au fond de jante, tout en restant positif.

La distance $h_1$ sera avantageusement comprise entre 0,05 $R_J$ et 0,20 $R_J$, et sur une distance radiale au plus égale à 0,5 $h_1$, le serrage $L_A - L_B$ sera avantageusement négatif, la largeur de l'anneau étant plus petite que la distance axiale séparant les deux bourrelets, ce qui permet un montage de l'ensemble pneumatique anneau sur la jante de service plus aisé. La distance radiale $h_2$ sera avantageusement comprise entre 0 et 0,1 $R_J$, ce qui procure une forte croissance de serrage sur un intervalle de hauteur faible et ainsi permet une meilleure prise d'étanchéité au niveau des lèvres de l'anneau d'étanchéité.

Quant à la distance $h_3$, elle sera avantageusement comprise entre 0,02 $R_J$ et 0,1 $R_J$. La suite de croissance ainsi décrite permet une meilleure déformation des lèvres de l'anneau d'étanchéité, du fait de leurs formes, et ainsi une efficacité accrue du point de vue étanchéité. La forme de la section méridienne de l'anneau permet l'apparition, à l'emplacement optimal, de la force de pression des lèvres de l'anneau sur les bourrelets nécessaires pour assurer l'étanchéité, sans nécessité d'avoir une contrainte de tension circonférentielle dudit anneau monté sur jante.

Afin d'obtenir un montage très aisé de l'anneau et du pneumatique, la dureté Shore A du matériau le constituant ne sera pas de préférence supérieure à 65, la dureté Shore A étant mesurée selon la norme ASTM D67549T. L'emploi d'une telle propriété est avantageusement possible étant donné la forme revendiquée de l'anneau conforme à l'invention qui présente les mêmes avantages que les anneaux de l'art antérieur, et en particulier celui de maintenir en place les bourrelets du pneumatique, lorsque celui-ci roule sous pression très faible voire nulle.

Une autre avantage non négligeable de l'anneau conforme à l'invention est sa simplicité de réalisation et en conséquence la faiblesse de son coût . il nécessite en effet aucune armature de renforcement pour le maintenir plaqué contre le fond de jante. Du fait de l'extensibilité et de l'extension des lèvres de l'anneau, il apparaît un serrage sur le fond de jante suffisant pour un bon maintien et centrage de l'anneau.

Les caractéristiques et avantages de l'invention seront mieux comprises à l'aide de la description qui suit et qui se réfère au dessin, illustrant à titre non limitatif des exemples d'exécution et sur lequel

- la figure 1 représente schématiquement un anneau non déformé à l'intérieur du pneumatique de dimension 180/70 R8 XZA monté sur sa jante de service 4.33/8,
- la figure 2 représente de même la section méridienne d'un anneau d'étanchéité conforme à l'invention,
- la figure 3 représente de même une variante de l'anneau d'étanchéité,
- la figure 4 représente de même l'anneau conforme à l'invention tel qu'il est déformé à l'intérieur du pneumatique monte et gonflé à sa pression nominale.

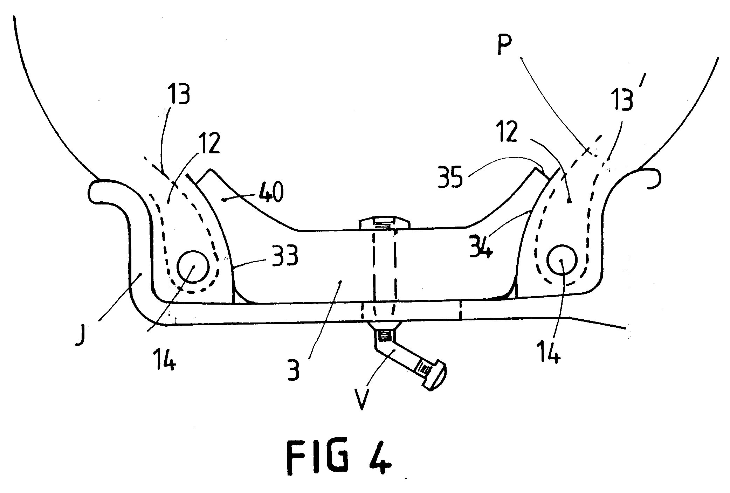

L'anneau (3) conforme à l'invention, est utilisé avec un pneumatique P, ci-dessus dénommé, pour engins de manutention. Le pneumatique P comprend une bande de roulement (11) réunie, par l'intermédiaire de deux flancs (10) à deux bourrelets (12), renforcés chacun par une tringle (14) (figure 4) autour de laquelle vient s'ancrer l'armature de carcasse (13) en formant des retournements (13'). Ce pneumatique P, de rapport de forme intérieure H/S égal à 0,7, est monté sur une jante J, comprenant un fond de jante plat (20) solidaire d'un rebord de jante (21) fixe, et réuni à un rebord de jante (22) amovible, par l'intermédiaire d'un anneau de verrouillage (23).

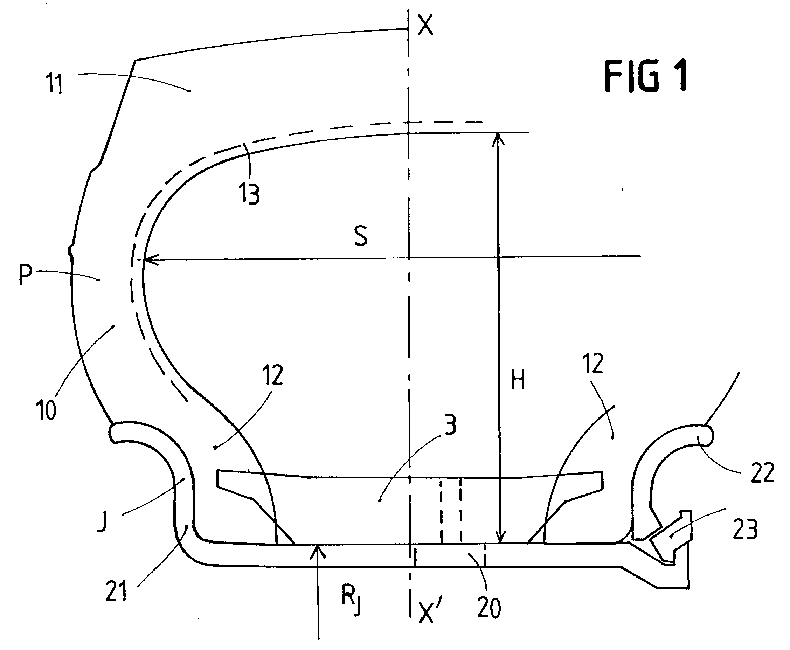

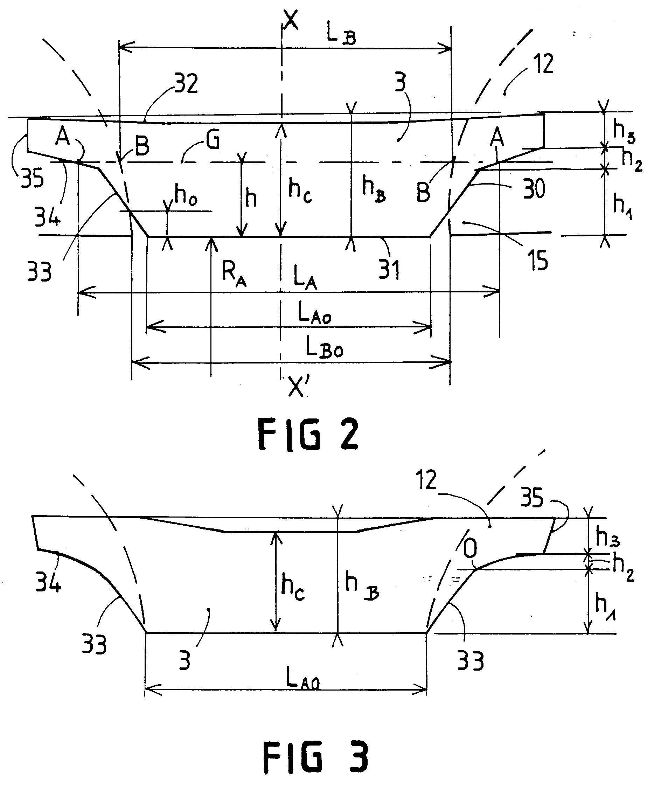

Dans ces configurations de jante, le rayon au siège de jante $R_J$ est le rayon du fond de jante. L'anneau d'étanchéité (3), montré sur la figure 1 à l'intérieur du pneumatique P monté sur la jante J et à l'état non déformé, est représenté en détail sur la figure 2. La section méridienne de l'anneau 3 est délimitée radialement à l'intérieur par une génératrice (31) parallèle à l'axe de rotation de la jante (J) de montage, et de rayon $R_A$ égal à 101,6 mm et au rayon nominal $R_J$ du fond de jante (20), et radialement à l'extérieur par une génératrice (32) non rectiligne, de sorte que la distance radiale $h_C$ séparant lesdites génératrices et mesurée sur l'axe de symétrie XX' de la section méridienne soit inférieure à la distance radiale $h_B$ séparant les mêmes génératrices et mesurée sur une parallèle à l'axe de symétrie XX' passant par l'extrémité de la section axialement la plus éloignée dudit axe de symétrie. Dans le cas étudié et montré, $h_C$ est égal à 0,17 $R_J$ et $h_B$ à 0,18 $R_J$. Latéralement, la section méridienne de l'anneau (3) est délimitée par deux côtés (30) symétriques par rapport à l'axe XX' et formés respectivement en partant de la génératrice (31) des segments de droite (33), (34) et (35).

Si l'on considère une génératrice G parallèle à la génératrice (31) et distante radialement de ladite génératrice (31) de la distance h variable entre une valeur nulle et la valeur $h_B$, cette génératrice G présente avec les deux côtés latéraux (30) des points d'intersection A distants axialement de la distance $L_A$, et avec les parois intérieures des bourrelets (12) des points d'intersection B distants axialement de la distance $L_B$. La distance $L_A$-$L_B$ est le serrage s de l'anneau sur les bourrelets (12).

Comme montré sur la figure 2, lorsque la distance h est nulle, la génératrice G n'est autre que la génératrice (31) et le serrage s est alors négatif, la distance axiale $L_{A0}$, qui est la largeur de la génératrice (31), étant inférieure à la distance axiale $L_{B0}$ séparant les deux extrémités axialement intérieures des pointes (15) des bourrelets (12). Sur la distance radiale $h_1$, égale à 0,1 $R_J$ et correspondant aux segments (33), le serrage $L_A$ - $L_B$ est faiblement croissant, en passant d'une valeur négative à une valeur positive au niveau de la hauteur $h_0$ égale à 0,05 $R_J$ et croissant jusqu'au niveau de la hauteur $h_1$ et égal à 0,13 $L_A$. Sur la distance radiale $h_2$, égale à 0,02 $R_J$ et correspondant aux segments (34), le serrage s est fortement croissant et il passe de la valeur 0,13 $L_A$ à une valeur 0,38 $L_A$ pour la distance radiale h relativement faible. Sur la distance radiale $h_3$, le serrage s devient décroissant, du fait de la courbure de la paroi interne du bourrelet (12), tout en restant positif pour devenir au niveau de la distance radiale $h_B$ égale à 0,32 $L_A$.

La figure 3 représente une variante de l'anneau d'étanchéité (3) dans laquelle on peut déceler, par rapport à l'anneau d'étanchéité de la figure 2, les différences qui suivent. La largeur $L_{A0}$ de la génératrice (31) est égale à la distance axiale $L_{B0}$ séparant les extrémités axialement intérieures des pointes (15) des bourrelets (12), le serrage est donc nul. Il devient ensuite positif et croît comme dans le cas de la figure 2 mais le segment (33) de ladite figure est remplacé par un premier arc curviligne (33), et le segment (34) par un deuxième arc curviligne (34), ces deux arcs curvilignes ayant des prolongements se coupant en O, situé à la distance radiale $h_1$ de la génératrice (31). Le point anguleux en O peut être avantageusement remplacé par un arc de cercle de petite longueur et forte courbure, comme montré sur le côté latéral de l'anneau situé sur le côté gauche de la figure 3. L'arc curviligne (34) est prolongé radialement à l'extérieur par un segment de droite (35) sensiblement parallèle dans cet exemple à la paroi intérieure du bourrelet 12, le long de la distance $h_3$, les valeurs $h_1$, $h_2$, $h_3$ de la figure 3 étant les mêmes que celles de la figure 2.

La figure 4 montre l'ensemble formé du pneumatique P, de l'anneau 3, et de la jante J, tel qu'il se présente monté et après gonflage au moyen de la rallonge coudée de valve V. L'anneau d'étanchéité (3), étant lubrifié sur sa face cylindrique intérieure et sur ses parois latérales, est mis en place à l'intérieur du pneumatique P. L'ensemble pneumatique-anneau d'étanchéité est ensuite monté sur la jante J, et l'ensemble est gonflé. Les segments ou arcs curvilignes (33)(34) s'appliquent contre les parois intérieures des bourrelets (12) en exerçant une pression de contact nettement plus élevée au niveau des lèvres (40) de l'anneau 3 qu'au niveau des segments ou arcs curvilignes (33), les lèvres (40) étant constituées par les portions de mélange vulcanisé de caoutchouc composant l'anneau (3) et situées entre la génératrice (32) et les segments (35) et (34) des' côtés latéraux de l'anneau.

## Revendications

1.  Anneau d'étanchéité (3), destiné à être monté sur un fond de jante (20) et entre les bourrelets (12) d'un pneumatique P de rapport de forme intérieure H/S au plus égal à 0,8, caractérisé en ce que, à l'état non monté, sa section méridienne est, délimitée par une génératrice (31) radialement intérieure de rayon $R_A$ égal au rayon $R_J$ du fond de jante (20) de la jante de montage J et de largeur axiale $L_{A0}$ comprise entre 0,8 et 1 fois la distance axiale $L_{B0}$ séparant les extrémités axialement intérieures des pointes (15) des bourrelets (12), par une génératrice (32) radialement extérieure de rayon supérieur au rayon $R_A$ d'une quantité $h_C$ comprise entre 0,05 $R_J$ et 0,40 $R_J$, et par deux côtés latéraux (30) de profils identiques (33, 34, 35) tel que le serrage transversal $L_A$-$L_B$ de l'anneau (3) sur les parois intérieures des bourrelets (12), négatif ou nul au niveau de la génératrice intérieure (31) soit successivement faiblement croissant sur une distance radiale $h_1$ au moins égale à 0,05 $R_J$, puis fortement croissant sur une distance radiale $h_2$ au plus égale à 0,4 $R_J$ pour devenir au plus constant sur la distance radiale $h_3$ au moins égale à 0,02 $R_J$, la somme des distances $h_1$, $h_2$ et $h_3$ étant égale à la hauteur $h_B$ des côtés latéraux de l'anneau (1), la différence $h_B$ - $h_C$ étant au plus égale à 0,05 $R_J$ et les distances $L_A$ et $L_B$ étant respectivement la largeur de l'anneau (3) et la distance séparant les bourrelets (12), mesurées sur une génératrice G située à distance radiale variable h de la génératrice (31).

2.  Anneau d'étanchéité (3) selon la revendication 1, caractérisé en ce que la croissance du serrage sur la distance radiale $h_1$ est uniforme, continue et sensiblement linéaire jusqu'à obtention au niveau de la hauteur $h_1$ d'un serrage maximum positif et au plus égal à 0,30 $L_A$.

3.  Anneau d'étanchéité (3) selon la revendication 2, caractérisé en ce que la croissance du serrage sur la distance radiale $h_2$ est telle qu'on obtienne au niveau de la hauteur $h_1$ + $h_2$ un serrage maximum, positif, au moins égal à 0,15 $L_A$.

4.  Anneau d'étanchéité (3) selon la revendication 3, caractérisé en ce que le serrage sur la distance radiale $h_3$ est positif et constant.

5.  Anneau d'étanchéité (3) selon l'une des revendications 1 à 4, caractérisé en ce que la distance radiale $h_1$ est comprise entre 0,05 $R_J$ et 0,20 $R_J$.

6.  Anneau d'étanchéité (3) selon la revendication 5, caractérisé en ce que la distance radiale $h_2$ est comprise entre 0 et 0,1 $R_J$.

7.  Anneau d'étanchéité (3) selon la revendication 6 caractérisé en ce que la distance radiale $h_3$ est comprise entre 0,02 $R_J$ et 0,1 $R_J$.

8.  Anneau d'étanchéité (3) selon l'une des revendications 1 à 7, caractérisé en ce qu'il est constitué d'un mélange vulcanisé caoutchouteux de dureté Shore A au plus égale à 65 points.

9.  Ensemble comprenant un pneumatique P, une jante J, un anneau (3) caractérisé en ce que l'anneau (3) est un anneau d'étanchéité selon l'une des revendications 1 à 8.

## Claims

1.  A sealing ring (3) for mounting on a rim base (20) between the beads (12) of a tyre P having an inner form ratio H/S at most equal to 0.8, characterised in that in the unmounted state its meridian section is defined by a radially inner generatrix (31) of radius $R_A$ equal to the radius $R_J$ of the rim base (20) of the mounting rim J and of axial width $L_{A0}$ of between 0.8 and 1 times the axial distance $L_{B0}$ between the axially inner ends of the toes (15) of the beads (12) by a radially outer generatrix (32) of radius greater than the radius $R_A$ by an amount $h_C$ of between 0.05 $R_J$ and 0.40 $R_J$, and by two lateral sides (30) of identical profile (33, 34, 35), such that the transverse clamping $L_A - L_B$ of the ring (3) on the inner walls of the beads (12), which is negative or zero at the level of the inner generatrix (31), successively increases slightly over a radial distance $h_1$ at least equal to 0.05 $R_J$, and then increases more greatly over a radial distance $h_2$ at most equal to 0.4 $R_J$, and becomes at most constant over the radial distance $h_3$ at least equal to 0.02 $R_J$, the sum of the distances $h_1$, $h_2$ and $h_3$ being equal to the height $h_B$ of the lateral sides of the ring (1), the difference $h_B - h_C$ being at most equal to 0.05 $R_J$ and the distances $L_A$ and $L_B$ being the width of the ring (3) and the distance between the beads (12), respectively, measured across a generatrix G located at a variable radial distance h from the generatrix (31).

2. A sealing ring (3) according to Claim 1, characterised in that the increase in the clamping over the radial distance $h_1$ is uniform, continuous and substantially linear until, at the level of the height $h_1$, a maximum positive clamping at most equal to 0.30 $L_A$ is reached.

3. A sealing ring (3) according to Claim 2, characterised in that the increase of the clamping over the radial distance $h_2$ is such as to reach a maximum positive clamping at least equal to 0.15 $L_A$ at the level of the height $h_1 + h_2$.

4. A sealing ring (3) according to Claim 3, characterised in that the clamping over the radial distance $h_3$ is positive and constant.

5. A sealing ring (3) according to one of Claims 1 to 4, characterised in that the radial distance $h_1$ is between 0.05 $R_J$ and 0.20 $R_J$.

6. A sealing ring (3) according to Claim 5, characterised in that the radial distance $h_2$ is between 0 and 0.1 $R_J$.

7. A sealing ring (3) according to Claim 6, characterised in that the radial distance $h_3$ is between 0.02 $R_J$ and 0.1 $R_J$.

8. A sealing ring (3) according to one of Claims 1 to 7, characterised in that it is formed of a vulcanised rubber stock of Shore A hardness of at most 65 points.

9. An assembly comprising a tyre P, a rim J and a ring (3), characterised in that the ring (3) is a sealing ring according to one of Claims 1 to 8.

## Patentansprüche

1. Dichtungsring (3), der dazu bestimmt ist, auf einem Felgenboden (20) und zwischen den Wülsten (12) eines Reifens P mit einem Innen-Formverhältnis H/S von höchstens gleich 0,8 montiert zu werden, dadurch **gekennzeichnet**, daß im nicht-montierten Zustand sein Meridian-Querschnitt begrenzt ist durch eine radial innenliegende Erzeugende (31), deren Radius $R_A$ gleich ist dem Radius $R_J$ des Felgenbodens (20) der Montagefelge J und deren axiale Breite $L_{AO}$ zwischen dem 0,8- und 1-fachen des axialen Abstands $L_{BO}$ liegt, der die axial innenliegenden Enden der Spitzen (15) der Wülste (12) trennt, durch eine radial außenliegende Erzeugende (32) mit einem Radius, der um ein Maß $h_C$, das zwischen 0,05 $R_J$ und 0,40 $R_J$ liegt, größer ist als der Radius $R_A$, und durch zwei seitlich angeordnete Seiten (30) mit identischen Profilen (33, 34, 35), so daß die querverlaufende Aufklemmung $L_A - L_B$ des Ringes (3) auf den Innenwänden der Wülste (12), die auf Höhe der inneren Erzeugenden (31) negativ oder Null ist, nachfolgend schwach bis auf einen radialen Abstand $h_1$ zunimmt, der mindestens gleich ist 0,05 $R_J$, dann kräftig auf einen radialen Abstand $h_2$ zunimmt, der höchstens gleich ist 0,4 $R_J$, um über den radialen Abstand $h_3$ höchstens konstant zu werden, der mindestens gleich ist 0,02 $R_J$, wobei die Summe der Abstände $h_1$, $h_2$ und $h_3$ gleich ist der Höhe $h_B$ der seitlich angeordneten Seiten des Ringes (1), die Differenz $h_B - h_C$ höchstens gleich ist 0,05 $R_J$ und die Abstände $L_A$ und $L_B$ die Breite des Ringes (3) bzw. der Abstand sind, der die Wülste (12) trennt, gemessen auf einer Erzeugenden G, die unten einem radialen, variablen Abstand h zu Erzeugenden (31) gelegen ist.

2. Dichtungsring (3) nach Anspruch 1, dadurch **gekennzeichnet**, daß die Zunahme der Aufklemmung über den radialen Abstand $h_1$ gleichförmig, kontinuierlich und im wesentlichen linear ist, bis das Niveau der Höhe $h_1$ erreicht ist, bei der eine maxiamle, positive Aufklemmung vorliegt und höchstens gleich ist 0,30 $L_A$.

3. Dichtungsring (3) nach Anspruch 2, dadurch **gekennzeichnet**, daß die Zunahme der Aufklemmung auf dem radialen Abstand $h_2$ so ist, daß man auf dem Niveau der Höhe $h_1 + h_2$ eine maximale, positive Aufklemmung erreicht, die mindestens gleich 0,15 $L_A$ ist.

4. Dichtungsring (3) nach Anspruch 3, dadurch **gekennzeichnet**, daß die Aufklemmung auf dem radialen Abstand $h_3$ positiv und konstant ist.

5. Dichtungsring (3) nach einem der Ansprüche 1 bis 4, dadurch **gekennzeichnet**, daß der radiale Abstand $h_1$ zwischen 0,05 $R_J$ und 0,20 $R_J$ liegt.

6. Dichtungsring (3) nach Anspruch 5, dadurch **gekennzeichnet**, daß der radiale Abstand $h_2$ zwischen 0 und 0,1 $R_J$ liegt.

7. Dichtungsring (3) nach Anspruch 6, dadurch **gekennzeichnet**, daß der radiale Abstand $h_3$ zwischen 0,02 $R_J$ und 0,1 $R_J$ liegt.

8. Dichtungsring (3) nach einem der Ansprüche 1 bis 7, dadurch **gekennzeichnet**, daß er aus einer vulkanisierten Gummimischung mit einer Shore-Härte A von höchstens gleich 65 Punkten besteht.

9. Anordnung mit einem Reifen P, einer Felge J und einem Ring (3), dadurch **gekennzeichnet**, daß der Ring (3) ein Dichtungsring nach einem der Ansprüche 1 bis 8 ist.

FIG 1

EP 0 626 279 B1

FIG 2

FIG 3

EP 0 626 279 B1

FIG 4